(19) **Europäisches Patentamt / European Patent Office / Office européen des brevets**

(11) **EP 1 015 664 B1**

(12) **EUROPEAN PATENT SPECIFICATION**

(45) Date of publication and mention
of the grant of the patent:
**26.09.2007 Bulletin 2007/39**

(21) Application number: **97927621.9**

(22) Date of filing: **09.05.1997**

(51) Int Cl.:
***C25B 3/08*** *(2006.01)*

(86) International application number:
**PCT/US1997/007994**

(87) International publication number:
**WO 1998/050603 (12.11.1998 Gazette 1998/45)**

(54) **ELECTROCHEMICAL FLUORINATION USING INTERRUPTED CURRENT**

ELEKTROCHEMISCHE FLUORIERUNG MIT UNTERBROCHENEM STROM

FLUORATION ELECTROCHIMIQUE AU MOYEN DE COURANT DE RUPTURE

(84) Designated Contracting States:
**BE DE**

(30) Priority: **02.05.1997 US 45514 P**

(43) Date of publication of application:
**05.07.2000 Bulletin 2000/27**

(73) Proprietor: **MINNESOTA MINING AND MANUFACTURING COMPANY**
**St. Paul,**
**Minnesota 55133-3427 (US)**

(72) Inventors:
• **POLSON, Stephen D.**
**Saint Paul,**
**Minnesota 55133-3427 (US)**
• **SPANGLER, Jeffrey C.**
**Saint Paul,**
**Minnesota 55133-3427 (US)**

• **WALLACE, Eric N.**
**Saint Paul,**
**Minnesota 55133-3427 (US)**
• **GROUBINA, Ludmila M.**
**deceased (RU)**
• **KAUROVA, Galina I.**
**St. Petersburg (RU)**
• **GANDLINA, Adda E.**
**St. Petersburg (RU)**
• **KRASILNIKOV, Anatoly A.**
**St. Petersburg (RU)**

(74) Representative: **Vossius & Partner**
**Postfach 86 07 67**
**81634 München (DE)**

(56) References cited:
**WO-A-94/13857**          **FR-A- 2 604 189**

EP 1 015 664 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Field of the Invention

The present invention relates to a process for the electrochemical fluorination of organic materials.

### Background

Fluorochemicals (e.g., fluorinated and perfluorinated organic compounds) are commercially valuable and useful chemical materials. Fluorochemicals can exhibit various useful properties, e.g., they may be inert, nonpolar, hydrophobic, oleophobic, etc. As such, fluorochemicals can be useful in a wide variety of applications. They can be useful as oil, water, and stain resistant chemicals; they can be useful as refrigerants and heat exchange agents; or as solvents and cleaning agents. Due to the versatility of fluorochemicals, and a consequent strong demand for these materials, there is a continuing need in the fluorochemical industry for new and improved methods of preparing fluorochemicals.

One well-known industrial process for preparing fluorochemical compounds is the electrochemical fluorination process commercialized initially in the 1950's by the 3M Company. This process, often referred to as Simons fluorination or electrochemical fluorination (ECF), is a method by which electric current is passed through an electrolyte solution containing a mixture of liquid anhydrous hydrogen fluoride and an organic compound intended to be fluorinated (the "substrate"). Generally it is taught that the Simons process is practiced with a constant current passed through the electrolyte; i.e., a constant voltage and constant current flow. See for example W.V. Childs, et al., Anodic Fluorination in Organic Electrochemistry, H. Lund and M. Baizer eds., Marcel Dekker Inc., New York, 1991. The current passing through the electrolyte causes one or more of the hydrogens of the substrate to be to replaced by fluorine.

The Simons process of electrochemical fluorination, although commercially useful, includes aspects that might desirably be improved upon. For example, the Simons process requires a significant amount of electrical energy passing through the electrolyte solution. Much electrical energy is effectively used to fluorinate the substrate, but a certain amount of this electrical energy converts to heat energy that must necessarily be carried away from the electrochemical fluorination cell as wasted energy, and adds to the overall cost of operating the process. It would be desirable to reduce the amount of electrical energy that is wasted as dissipated heat energy in the Simons process, and thereby reduce the overall cost of electricity needed to operate this process.

Also, the conventional Simons process often includes the use of conductivity additives to allow the passage of current through the electrolyte solution. See for example J. Burdon and J.C. Tatlow. The Electrochemical Process for the Synthesis of Fluoro-Organic Compounds, Advances in Fluorine Chemistry, edited by M. Stacey et al., volume 1 p. 129 (1960). Conductivity additives can cause undesired results when used in the Simons process. Conductivity additives, for example, can interfere with the fluorination of the substrate, either by causing increased corrosion of the anode, or by themselves being consumed or fluorinated in the fluorination reaction. This can reduce the overall yield of the desired fluorinated product, and in many ways can increase the costs of the fluorination operation. Therefore, it would be desirable to reduce or even substantially eliminate the need for conductivity additives.

Finally, the Simons process can be difficult to maintain at steady state for extended periods of time because high resistance by-product films and tars can tend to accumulate on electrodes of the fluorination cell, specifically, at the anode. In normal operation, the accumulation of films and tars on the anode causes increased resistance of the electrochemical cell, and an upward drift in cell voltage. The problem can become more serious and lead to the condition referred to as "current blocking," which is manifested as a permanent increase of resistance and loss of conductivity within the cell. To correct current blocking often requires shut-down of the apparatus for cleaning. It would therefore be desirable to prevent increases in the resistance of a fluorination cell that can lead to loss of conductivity within the cell, and the permanent condition of current blocking.

WO94/13857 is directed to a selective fluorination of a fluoroether having a group of the formula -CH2F which when fluorinated provides the final product having a fluoroether where the end group is of the formula -CHF2. According to WO94/13857, the selectivity towards partially fluorinated as opposed to a perfluorinated product may be increased by pulsing the anode potential in an electrochemical fluorination cell. In the process described in WO94/13857, partial fluorination rather than perfluorination is achieved essentially by passing a high quantity of the reactant through the cell apparatus so that the product is removed from the cell apparatus long before a quantity of charge sufficient to substantially perfluorinate the reactant has passed through the cell. One of the ways this result is achieved, is by applying a pulsed anode to potential whereby the amount of charge passed through the cell with time is considerably lowered.

WO94/13857 teaches that by reducing product residence in the reactor the yield of their desired monofluorinated product can be improved. In one embodiment, the system is operated at very low per pass conversions of the order of 10% or even lower. In a second embodiment, the system is operated at a very low per pass conversion and the system is purged with nitrogen to sweep out the desired product to prevent further flurorination.

In both embodiments the product "distills" from the reactor. Thus, the product leaves the reactor as a vapor and is condensed.

In examples 1, 2, 3 and 5, WO94/13857 teaches that this can be done with a constant applied potential with a low residence time of the substrates so that the partially fluorinated products are rapidly removed from the cell. In these examples the potential was kept nominally constant. In example 1 at 5.2 volts, in example 2 at 4.5 volts, in example 3 at 6 volts, and in example 5 at 6 volts.

D1 also teaches that by reducing the product residence time in the reaction zone they can improve the yield of their desired monofluorinated product. This is achieved by using a pulsed current mode of operation. The desired product escapes from the reaction zone, the anode surface, when current is not passing. In example 4, D1 teaches that this can be done using a power regime in which the terminal voltage is operated at an elevated voltage for 0.2 seconds and then at a reduced voltage for 0.2 seconds.

## Summary of the Invention

The present invention relates to a process for the electrochemical fluorination of chemical compounds such as those containing organic moieties. The process is defined in claim 1. In the process, a reaction solution is provided that comprises an organic substrate and hydrogen fluoride. An electric potential (voltage) is established across the reaction solution causing an electric current to pass through the reaction solution, and thereby causing fluorination of the organic substrate. In the method, the electric current is periodically and regularly interrupted, i.e., the current flows at a first current level, identified as an elevated current level, and is periodically interrupted to flow at a reduced current level. In the invention, the current is interrupted in such a manner that the resistance of the electrochemical fluorination cell operated under the conditions of the present invention is lower than the resistance of the cell operated without interruption of the current.

Interrupting the electric current during fluorination offers a number of advantages over conventional electrochemical fluorination methods. As stated, the current can be interrupted in such a manner that the resistance of the fluorination cell will be reduced compared to the resistance of the same fluorination cell operating with uninterrupted current. The reduced cell resistance resulting from interrupted current in turn results in a lower cell voltage being required to achieve fluorination at constant current; i.e., the voltage between the anode and the cathode with interrupted electric current can be lower relative to the voltage of the same cell, operated with the same amount of current, wherein the current is interrupted. At the same time, because the cell resistance is comparatively lower, the amount of wasted heat energy created during the fluorination process is also reduced, reducing or eliminating the need to remove wasted heat energy from the fluorination cell. The achievement of a lower operating voltage allows stable cell operation at higher current densities, which in turn allows more product to be produced in a given time period, and extended production runs (e.g., days, weeks, etc.) without significant interruptions. At production scale, reduced cell voltage, cell resistance, and increased current, result in a more efficient process with higher production rates of a fluorinated product, often at a lower cost. Furthermore, interrupted current can reduce or eliminate the need for conductivity additives in an electrochemical fluorination process. This can reduce corrosion of the electrodes within the fluorination cell, reduce the amount of energy and raw materials wasted due to fluorination of the conductivity additives themselves, and reduce unwanted by-products. In some cases, interrupted electric current increases the selectivity of the fluorination reaction resulting in higher yields and reduced by-products. All of these identified improvements advantageously reduce overall operation costs for the electrochemical fluorination process.

As used within the present description, and in reference to an electrochemical fluorination process:

"Fluorinated" refers to chemical compounds having at least one carbon-bonded hydrogen replaced by a fluorine, and specifically includes perfluorinated compounds. "Perfluorinated" compounds refers to chemical compounds in which essentially all carbon-bonded hydrogens have been replaced by fluorines, although typically some residual hydride will be present in a perfluorinated composition; e.g., preferably less than I milligram hydride per gram perfluorinated product.

"Uninterrupted current," refers to the electric current flowing through an electrochemical fluorination cell, wherein the current is substantially constant; i.e., not substantially varied, and specifically, not periodically interrupted as described in the following description.

## Brief Description of the Figures

Figures 1 and 2 are graphs of current versus process time; the current is interrupted according to the present invention.
Figures 3 and 4 are graphs of voltage versus process time, with voltage varying according to the present invention.
Figure 5 is a graph of electric power versus process time, with power varying according to the present invention.

Figure 6 is a graph of current versus time with current being interrupted (varying) in a sinusoidal manner according to the present invention.

Figure 7 is a graph of current versus terminal voltage of an electrochemical fluorination cell during a fluorination process.

## Detailed Description

The present invention relates to a method of per fluorinating a substrate to produce a per fluorinated product. The process can be practiced according to methods similar to electrochemical fluorination methods generally known as "Simons" electrochemical fluorination.

The "Simons process" or the "Simons electrochemical fluorination process" is a commercial process for fluorinating a substrate dissolved or dispersed in liquid, anhydrous, hydrogen fluoride (HF). Simons electrochemical fluorination can be carried out essentially as follows. A substrate and an optional conductivity additive are dispersed or dissolved in anhydrous hydrogen fluoride to form an electrolytic "reaction solution." One or more anodes and one or more cathodes are placed in the reaction solution and an electric potential (voltage) is established between the anode(s) and cathode(s), causing electric current to flow between the cathode and anode, through the reaction solution, and resulting in an oxidation reaction (primarily fluorination, i.e., replacement of one or more carbon-bonded hydrogens with carbon-bonded fluorines) at the anode, and a reduction reaction (primarily hydrogen evolution) at the cathode. As used herein, "electric current" refers to electric current in the conventional meaning of the phrase, the flow of electrons, and also refers to the flow of positively or negatively charged chemical species (ions); while wishing not to be bound by theory, it is believed that the current flowing through the reaction solution in the process is significantly a flow of such ionic chemical species through the reaction solution. The Simons process is well-known, and the subject of numerous technical publications. An early patent describing the Simons process is U.S. Patent No. 2,519,983 (Simons), which contains a drawing of a Simons cell and its appurtenances. A description and photograph of laboratory and pilot plant-scale electrochemical fluorination cells suitable for practicing the Simons process appear at pages 416-418 of Vol. 1 of "Fluorine Chemistry," edited by J.H. Simons, published in 1950 by Academic Press, Inc., New York. United States Patent Numbers 5,322,597 (Childs et al.) and 5,387,323 (Minday et al.) each refer to the Simons process and Simons cell. Further, electrochemical fluorination by the Simons process is described by Alsmeyer et al., Electrochemical Fluorination and Its Applications, Organofluorine Chemistry: Principles and Commercial Applications Chapter 5 pp. 121-43 (1994); S. Nagase in Fluorine Chem. Rev., 1 (1) 77-106(1967); and, J. Burdon and J.C. Tatlow. The Electrochemical Process for the Synthesis of Fluoro-Organic Compounds. Advances in Fluorine Chemistry, edited by M. Stacey et al., (1960).

In the practice of the invention, a reaction solution is prepared which comprises hydrogen fluoride and a substrate. The hydrogen fluoride is preferably anhydrous hydrogen fluoride, meaning that it contains at most only a minor amount of water, e.g., less than about 1 weight percent (wt%) water. Such a minor amount of water present in the hydrogen fluoride is not unacceptable because this water is typically oxidized upon application of a voltage between the cathode and the anode.

The substrate can be any chemical compound or composition that comprises a carbon-bonded hydrogen, and that can be combined with hydrogen fluoride (optionally in the presence of a conductivity additive) to prepare a reaction solution through which electric current can be passed to cause per fluorination of the substrate. The substrate can comprise any of a variety of organic moieties that can be straight, branched, saturated or unsaturated, partially fluorinated, and which can optionally include one or more of a variety of known functional groups including carbonyl, hydroxyl, sulfonyl, ether, amine, nitrile, aromatic, and substituted compounds. Such useful substrates are described, for example, in United States Patent No. 2,519,983 (Simons), the description of which is incorporated herein by reference.

Examples of preferred organic substrates include pure hydrocarbon compounds such as alkanes (e.g., hexane); alkenes; aromatics; hydrocarbons that contain oxygen such as ethers and ether acids; hydrocarbons that contain nitrogen, such as amines (e.g., dibutyl amine); carboxylic acids and carboxylic acid halides, carboxylic acid esters and sulfonic acid esters; other sulfur-containing compounds such as alkanesulfonyl halides; mercaptans; thioesters; sulfones; alcohols; and other compounds.

In general, the substrate is preferably to some degree soluble or dispersible in liquid hydrogen fluoride. The substrate can be in the form of a liquid, solid, or gaseous vapor, and can be introduced to the hydrogen fluoride as appropriate for its physical state. Specifically, gaseous substrates can be bubbled through the hydrogen fluoride to prepare the reaction solution, or charged to the cell under pressure. Solid or liquid substrates can be dissolved or dispersed in the hydrogen fluoride.

The reaction solution can contain any relative amounts of hydrogen fluoride and substrate that allow effective fluorination of the substrate. A useful mass ratio of hydrogen fluoride to substrate can be, for example, in the range from about 25:75 to 99:1 (hydrogen fluorideaubstrate), preferably from about 50:50 to 99:1, and more preferably in the range from about 75:25 to 99:1 hydrogen fluoride:substrate.

Generally, the reaction solution should be sufficiently electrically conductive to allow electric current to pass through the reaction solution in an amount sufficient to result in fluorination of the substrate. Pure liquid anhydrous hydrogen fluoride is substantially nonconductive. Therefore, to be conductive the reaction solution must contain an electrolytic component that allows passage of electric current through the reaction solution. A wide variety of organic substrates, particularly those containing functional groups, are both soluble in hydrogen fluoride and sufficiently electrolytic to allow passage of an effective amount of electrolyzing current. Thus, in some instances the organic substrate can function as the electrolytic component of the reaction solution. If, however, the organic substrate does not impart sufficient electrical conductivity to the hydrogen fluoride, the reaction solution can be made sufficiently electrically conductive by the addition of a conductivity additive. For example, certain hydrocarbons and hydrofluorocarbons dissolve only to a small extent in hydrogen fluoride. Electrochemical fluorination of these types of compounds generally can require that a conductivity additive be added to the reaction solution. J. Burdon and J.C. Tatlow, The Electrochemical Process for the Synthesis of Fluoro-Organic Compounds, Advances in Fluorine Chemistry, edited by M. Stacey et al., (1960); United States Patent Nos. 3,028,321 (Danielson), 3,692,643 (Holland), and 4,739,103 (Hansen).

As stated, the conductivity additive can be any usefully conductive material or compound, and can be either organically or ionically conductive. A short list of examples includes mercaptans such as butyl mercaptan and methyl mercaptan, esters, anhydrides, dimethyl disulfide (DMDS), and ionic salts such as potassium fluoride and lithium fluoride, just to name a few. Other usefully conductive compounds are well known in the art of electrochemical fluorination.

If a conductivity additive is included in the reaction solution, the conductivity additive can be included at any amount that will result in a reaction solution sufficiently conductive to allow fluorination of the substrate. It can be preferred to use the minimum amount of conductivity additive necessary to maintain a useful amount of electric conductivity of the reaction solution, because a minimal amount of conductivity additive can allow steady operation of a fluorination cell while maximizing efficient use of electricity, and may also reduce or minimize the amount of unwanted by-products caused by undesired fluorination of the conductivity additive. Most preferably, no conductivity additive is used unless necessary for stable cell operation. It is a specific advantage of the invention that improved conductivity of the fluorination cell can be achieved by using interrupted current, without the use of conductivity additives, or, with the use of a reduced amount of conductivity additive. The reduced amount of conductivity additive needed in the reaction solution allows increased yields of fluorinated product by reducing the amount of by-product created by the conductivity additives (e.g., when organic conductivity additives are used), and by reducing the amount of current wasted in causing the fluorination of such undesired by-products. As an example of a useful amount of conductivity additive, when required, the conductivity additive can be present in an amount of less than 20 weight percent conductivity additive, based on the amount of substrate; e.g., less than about 10 weight percent, or 5 weight percent, based on the amount of substrate.

The reaction solution can be exposed to reaction conditions (e.g., reaction temperature, reaction pressure, and electric voltage, current, and power) sufficient to cause fluorination of the substrate. In general, the reaction conditions can be any that are found to facilitate the production of a desired fluorinated product. Reaction conditions chosen for a particular fluorination process can be chosen depending on factors such as the size and construction of the electrochemical fluorination cell; the composition (i.e., identity and relative amounts) of each component of the reaction solution and the presence or absence of a conductivity additive; in a continuous reaction process, the flow rates of each component; the desired fluorinated product, etc.

The reaction temperature that the electrochemical fluorination cell is operated at can be any temperature that allows a useful degree of fluorination of the substrate. The reaction temperature can be chosen and controlled depending on the various factors identified above, as well as others. For instance, the reaction temperature can be chosen depending on the solubility of the substrate, the physical state of either the substrate or the fluorinated product (e.g., whether one or the other is desired to be in a liquid or a gaseous state), and also depending on other reaction conditions such as the reaction pressure. The reaction temperature can be chosen to be above the boiling point of the fluorinated product, in which case it can be beneficial to operate the cell in a pressure vessel under autogenous pressures. Reaction temperatures in the range from about -20°C to 80°C have been found to be useful. Temperatures in the range from about 20 to 65°C can be preferred.

Useful reaction pressures have been found to be in the range from about ambient (atmospheric) pressure to about 65 psig ($4.48 \times 10^5$ Pa), and can preferably be in the range from about 5 to 45 psig ($0.34 \times 10^5$ to $3.10 \times 10^5$ Pa). Still, operating pressures outside of these ranges can also be used.

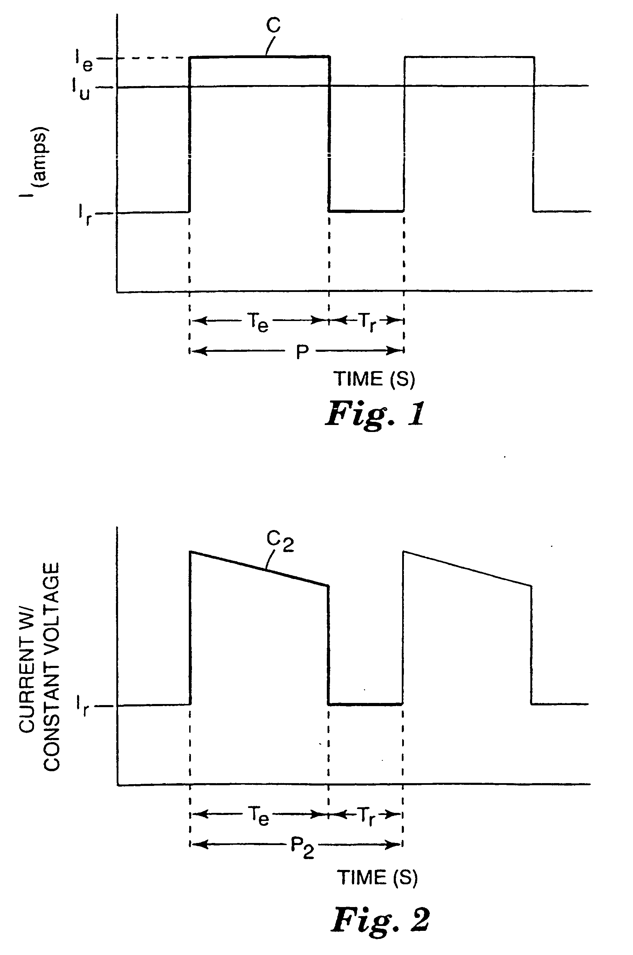

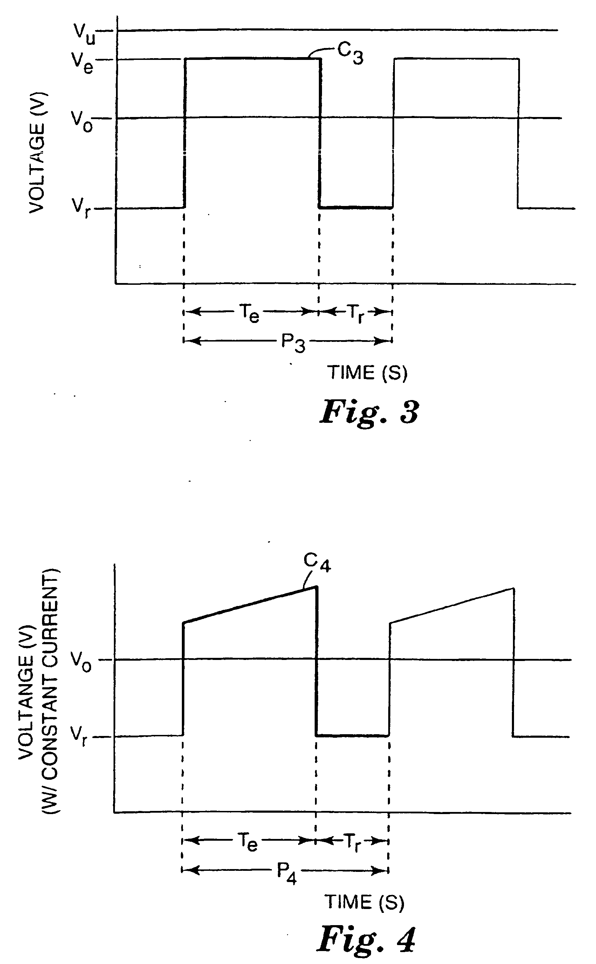

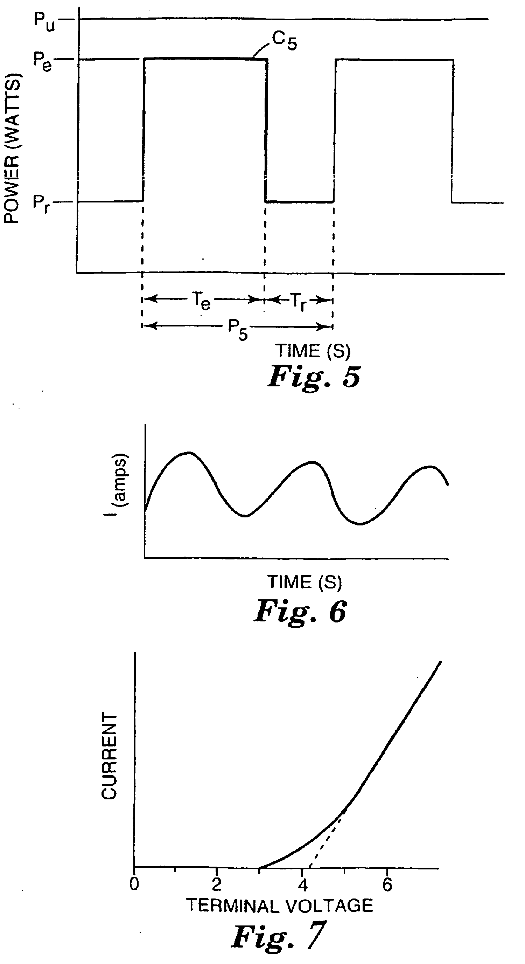

The electricity passed through the reaction solution can be any amount, as described by parameters including the current, voltage, and power of the electricity, that will result in per fluorination of the substrate. In the practice of the present invention, the electric current is interrupted wherein the reduced current is substantially zero or in the range from about 0 to 2 mA/cm². The term "interrupted" when used with respect to an electrical parameter (e.g., current, current density, voltage, power, etc.), describes a periodic change in the value of that parameter through a regular, repeating, cycle. The term "cycle," as in current cycle, voltage cycle, or power cycle, etc., refers to a single, complete execution through the different levels through which the parameter varies. As an example, a current cycle describes a single execution through various levels of current that pass through a fluorination cell, beginning at a starting current level (taken as any arbitrarily chosen point of the cycle), continuing through operation at one or more other current levels, and returning to the starting point at the initial current level. An example of a current cycle is illustrated in Figure 1, showing a graph of electric current versus process time. In the Figure, the electric current varies through a regular, periodic cycle (identified as the darkened portion of the cycle, labeled C), having a period P, an elevated current level $I_e$, and a reduced current level $I_r$. Period (P) is defined herein as the time taken for the execution of a single cycle. Examples of a voltage cycle and a power cycle are provided, respectively, in Figures 3 and 5, respectively, and are identified as $C_3$ and $C_5$.

In the practice of the invention, a cycle (e.g., a current cycle) can take any useful form, and can be described as a waveform. The cycle can be, for example, a square wave (see Figures 1 and 3), a substantially square wave, a sinusoidal wave (see Figure 6), or any other periodic cycle. An idealized wave form is the square wave cycle illustrated in Figures 1, 3, and 5, relating to electric current, voltage, and power. Figure 3, for example, illustrates variation (i.e., interruption) of cell voltage as follows: from a starting point at the beginning of the cycle $C_3$, and at a reduced voltage $V_r$ voltage increases to elevated voltage $V_e$, where it is maintained for a period $T_e$; voltage then decreases to a reduced voltage $V_e$, where it is maintained for a period of T, to complete a single cycle. This cycle repeats regularly throughout the fluorination process.

In Figure 1, the elevated current level is illustrated as constant within each cycle. In practice, however, neither the elevated nor the reduced current level need to be constant, and can vary throughout a cycle. This is shown in Figure 2. which illustrates a plot of electric current versus process time wherein current (e.g., elevated current) is shown to slowly increase (while cell voltage is held constant). Furthermore, the elevated and reduced current levels can, if desired, be only the extremes of a cycle, wherein other portions of the cycle include intermediate current levels, such as is exemplified in Figure 6, showing a sinusoidal waveform for a current cycle.

As stated above, the current flowing through the reaction solution can be any amount of current that will result in per fluorination of the substrate. Current can be limited by the inherent properties of the electrochemical fluorination cell. The current is preferably insufficient to cause excessive fragmentation of the substrate, or to cause the liberation of fluorine gas during fluorination. For the sake of convenience, electric current measurements can be described in terms of current density, which is the current in amps passing through the reaction solution measured at an active site of the anode or anodes, divided by the area of the anode or anodes. As examples of current densities that have been found to be useful within the present invention, elevated current densities can be, for example, in a range from about 10 to 400 mA/cm$^2$ (milliamps per square centimeter), e.g., 200 or 300 milliamps, and are preferably in the range from about 20 to 160 mA/cm$^2$. Reduced current densities are substantially zero or in the range from about 0 to 2 mA/cm$^2$.

Periodic current cycle can be effected by any known and useful method of controlling electricity in an electrochemical fluorination cell. Because cell resistance in an electrochemical fluorination cell is relatively constant, current can be periodically cycled by controlling any one of the electric voltage across the reaction solution, the power flowing through the reaction solution, or the current flowing through the reaction solution, whichever is most convenient. Generally, the electrical parameter that is easiest to control is the voltage applied across a fluorination cell. Thus, while all possible methods of providing cycled current in an electrochemical fluorination cell are contemplated within the present invention, portions of the description will be described in terms of controlling the voltage applied across a reaction solution, in a manner to provide (given a relatively stable cell resistance) a periodically cycled current, and a similarly periodically cycled electric power flowing through the reaction solution.

The voltage applied across the reaction solution can be varied to result in a current cycle of the type described above. Specifically, the voltage can be varied through a regular, repeating, periodic cycle, wherein the cycle is defined by voltage levels comprising an elevated voltage and a reduced voltage. Such a voltage cycle will have a period and a waveform similar to the period and waveform described above for the periodically interrupted electric current. An example of a voltage cycle is illustrated in Figure 3, showing a graph of cell voltage versus process time. In Figure 3, voltage varies through a regular, periodic cycle $C_3$, having a period $P_3$, an elevated voltage $V_c$ and a reduced voltage $V_r$. Figure 3 also identifies a zero current intercept voltage, $V_o$, defined for purposes of the present description as the minimum voltage required to result in fluorination of a particular substrate. The zero current intercept voltage $V_o$ can be empirically determined for a given fluorination reaction by plotting the current vs. voltage of electricity passing through a given reaction solution, and extrapolating the linear portion of the curve to the zero current intercept (see Figure 7). The value of the zero current intercept voltage $V_o$ will be a function of a particular fluorination reaction, but, for purposes of the present description, will be approximated for the fluorination of an organic substrate as to be 4.2 volts.

In the practice of the invention, the elevated voltage ($V_e$) can be any voltage that results in fluorination of the substrate, e.g., a voltage that will cause current to flow through the reaction solution.. To accomplish current flow and fluorination of the substrate, the elevated voltage should be at least equal to or greater than the zero current intercept voltage $V_o$ of the fluorination reaction, and for many fluorination reactions of organic substrates, can preferably be in a range from about 4.2 to about 9 volts (V), more preferably from about 4.5 to 6 V. The reduced voltage can be any voltage that will result in a reduced cell resistance relative to cell resistance when operated with uninterrupted current. Preferably, the reduced voltage is of a value that will result in substantially no current flowing through the reaction solution (e.g., $I_r$ will be substantially zero). This can preferably be accomplished by providing a reduced voltage that is below the zero

current intercept voltage $V_o$. It should be noted that although Figures 3 and 4 each show a reduced voltage of the same polarity as the elevated voltage, and although it is preferable that the reduced voltage be positive, this is not a requirement of the present invention as it would be possible, if desired, to use a reduced voltage having a negative polarity compared to the elevated voltage; e.g., a voltage that would be shown as a negative voltage on either of Figures 3 or 4. Voltage, in terms of cell voltage, reduced voltage, elevated voltage, etc., refers to voltage measured between cathode and anode.

In Figure 3, the elevated voltage ($V_e$) is shown to be a constant value. In practice, however, neither the elevated voltage nor the reduced voltage are required to be completely or substantially constant, and either or both can vary throughout a pulse cycle. As an example, Figure 4 illustrates voltage cycle $C_4$ wherein the elevated voltage is not constant through the pulse cycle. In Figure 4, the cell voltage is shown to increase from the reduced voltage to an elevated voltage greater than the zero current intercept voltage $V_o$. The elevated voltage then gradually increases before falling back to the reduced voltage level $V_r$. This phenomena, often referred to as voltage "drift," is thought to be a result of films that can build on the surface of the anode, gradually increasing the resistance of the cell. As a further example of a non-constant elevated or reduced voltage, consider again Figure 6, showing a sinusoidal current cycle; a cell operating with a sinusoidal current cycle will have a similar sinusoidal voltage cycle.

The value of the electric power, in watts or joules/sec, passing through the reaction solution can also vary as described above for electric current and voltage. Specifically, the power can vary through a regular, repeating, periodic cycle, wherein the power varies between elevated and reduced power levels. Such a cycle will have a period and a waveform analogous to that described above for varying electric current and voltage. An example of a power cycle is illustrated in Figure 5, showing a graph of power versus process time. In the Figure, the power varies through a regular, periodic cycle $C_5$, having a period $P_5$, an elevated power level $P_e$, and a reduced power level $P_r$.

The amount of electric current passing through the reaction solution, in terms of electric power, can be any amount of current that in combination with the other reaction conditions of the fluorination process will result in fluorination of the organic substrate. Electric power is defined as voltage times current (VxI), and therefore, the amount of electric power used in the fluorination process is dependent on the current and voltage used, and on the size of the fluorination cell.

As stated above, the electric current flowing through the fluorination cell can be controlled by any control means useful to provide a periodically interrupted electric current through the reaction solution. Many such control means will be understood by those skilled in the art of electricity and electrochemical fluorination. As one specific example of a means to control current, the electric voltage applied across the reaction solution can be periodically interrupted (i.e., reduced) by connecting the anode and cathode to a power supply having a cycle timer with two predetermined voltage set points, one set point corresponding to an elevated voltage and another set point corresponding to a reduced voltage. The timer can cycle between these two set points at preselected timing intervals. Briefly, a second example of control means useful for effecting a periodically cycled current through the reaction solution is by directly controlling the current by use of a programmable logic controller (PLC) on a power supply.

It has been found that interrupting the electric current through an electrochemical fluorination cell can result in several advantages in a fluorination process. Specifically, the electrical resistance (in ohms) of an electrochemical fluorination cell can be reduced compared to the electrical resistance of the same cell under the same conditions except that an uninterrupted current flows through the reaction solution. As a matter of convenience, resistance of a fluorination cell can be described in terms of a "normalized resistance." "Normalized resistance," as used within the present description, refers to a measurement of resistance across a fluorination cell, as calculated according to the following equation:

$$R_n = (V_{avg} - V_o)/\text{current density}$$

$$(1).$$

In formula 1, $V_{avg}$ is the average voltage of the cell (when current is interrupted the average elevated voltage ($V_e$) can be used), $V_o$ is defined above, and current density is as defined. The normalized resistance has dimensions of resistance times area, and units, e.g., of ohm-ft$^2$, or ohm-dm$^2$. The use of a normalized resistance is convenient for purposes of this description because normalized resistance can be considered to be relatively constant for a given fluorination cell and fluorination process. Therefore, normalized resistance is a convenient measure of improvement between operation with interrupted current and operation with uninterrupted current.

The normalized resistance of an electrochemical cell operating according to the present invention can vary, but as an exemplary range $R_o$ can be in the range from about 0.01 to 0.05 ohm-ft$^2$.

A result of the reduced resistance within the electrochemical fluorination cell of the present invention is that the cell can operate at an elevated voltage ($V_e$) that is relatively lower than the voltage that the cell would otherwise operate at with uninterrupted current. This effect is illustrated in Figure 3, showing the voltage that the fluorination cell would operate at under conditions of uninterrupted current $V_u$, compared to the voltage when operated with interrupted

current (elevated voltage) $V_e$. Moreover, operation at a relatively lower voltage provides an electrochemical fluorination process that requires a reduced amount of total electric power, which reduces electricity costs, reduces the amount of heat generated during the fluorination process that would otherwise have to be removed, and, when practiced in the fluorination of certain substrates and optional conductivity additives, may reduce the production of undesired by-products.

In the practice of the invention, the current is interrupted at a cycle time of 0.4 seconds or more such that the cycle period P is sufficient to cause the advantage of reducing the resistance of the electrochemical fluorination cell compared to resistance during operation with uninterrupted current. Cycle periods as low as 0.4 seconds have been found to be useful as well as cycle periods of 1.5, 3, 10, 30, 150, 300.

The portion of the cycle period wherein the current is at elevated current and elevated voltage (identified herein as $T_e$), and the portion of the cycle period at reduced current and reduced voltage (identified herein as $T_r$) can be any amounts of time that will be effective in the fluorination process to produce a per fluorinated product, and sufficient to cause a relatively reduced cell resistance. It can be preferable to minimize the reduced current time period ($T_r$), both in absolute terms and in terms relative to the elevated period, because the reduced current time period is non-productive. That is, fluorination of the substrate occurs as a result of operation at elevated current, e.g., at a rate proportional to the ratio of elevated current ($T_e$) to cycle time or cycle period (P). Therefore, the percentage of the current cycle at elevated current ($T_e$) is desirably maximized, and the amount of time at reduced current ($T_r$) is desirably minimized. Preferred reduced voltage periods ($T_r$) can be less than 50% of the total period P, and are even more preferably less than about 20%, 10%, or less, of the total period P. In practice, e.g., in large scale production, the reduced period T, can preferably be in the range from about 1 to 5, e.g., 3 seconds, with the elevated period $T_e$ being preferably 150, 200, or 300 seconds. Also in practice, to optimize the operation, if the elevated voltage increases gradually the elevated period $T_e$ can be reduced; contrariwise, if the elevated voltage decreases or is relatively low the elevated period $T_e$ can be increased.

The types of compounds ("electrochemical fluorinated product," or "fluorinated product") that can be prepared according to the present invention are various, and will depend primarily on the chemical identity of the substrate. In general, the desired fluorinated product will be a fluorinated or perfluorinated analog of the substrate; i.e., the fluorinated product will have a carbon backbone of a length similar to the length of the substrate, but will have one or more of the carbon-bonded hydrogens replaced with fluorine. Still, it is possible for the substrate to react during the fluorination process to produce fluorinated product containing fewer or more carbon atoms than the substrate. Preferably, the fluorinated product will be substantially perfluorinated. Generally, the fluorinated product compound will be completely saturated because any unsaturation within the substrate will react and fluorine will add across the unsaturation. On the other hand, certain functional groups which might be present on the substrate can be essentially unaffected by the electrochemical fluorination process (e.g., sulfonyl groups, S=O bonds in sulfones, sulfates, and alkanesulfonyl halides, and the C=O bonds in carboxylic acids and their derivatives), and will remain intact at least to a useful degree in the fluorinated product.

Electrochemical fluorination cells in which the process of the present invention can be performed (also referred to herein as the "cell" or the "fluorination cell") may be any conventional electrochemical fluorination cell known in the art of electrochemical fluorination. In general, a suitable fluorination cell can be constructed of components including a cell body comprising a reaction vessel capable of containing the reaction solution, and electrodes that may be submerged into the reaction solution for the passage of current through the reaction solution. Generally, in a relatively large-scale setting, cells useful in the practice of the invention can comprise a cell body constructed typically of carbon steel in which is suspended an electrode pack comprising a series of alternating and closely-spaced cathode plates (typically but not necessarily made of iron, nickel, or nickel alloy) and anode plates (typically but not necessarily made of nickel). The plates are immersed in the reaction solution, a voltage is applied to the electrodes, and current passes through the reaction solution.

Electrochemical fluorination cells that can be useful in the practice of the present invention are described, for example, in U.S. 2,519,983, GB 741,399 and 785,492. Other useful electrochemical fluorination cells include the type generally known in the electrochemical fluorination art as flow cells. Flow cells comprise a set (one of each), stack, or series of anodes and cathodes, where reaction solution is caused to flow over the surfaces of the anodes and cathodes using forced circulation. These types of flow cells are generally referred to as monopolar flow cells (having a single anode and a single cathode, optionally in the form of more than a single plate, as with a conventional electrochemical fluorination cell), and, bipolar flow cells (having a series of anodes and cathodes). Bipolar flow cells are described, for example, in United States Patent No. U.S. 5,322,597.

Other details of the Simons electrochemical fluorination process and cell will be omitted in the interest: of brevity, and the disclosures of such technology in the above-identified references can be referred to for such detail.

Example 1

A 2.5 liter electrochemical fluorination cell of the type described in U.S. Pat. No. 2,713,593, equipped with a -40°C overhead condenser, 0.40 ft$^2$ (3.7 dm$^2$) nickel anode and a voltage controller having a cycle timer, was charged with a solution of 97 wt. % anhydrous hydrogen fluoride and 3 wt.% dimethyl disulfide. A mixture of octanesulfonyl fluoride containing 6 wt.% dimethyl disulfide was fed continuously to the cell, which was operate at 206 kPa (30 psig), 54°C, the current controlled at 53 amps/ft$^2$ (5.7 amps/dm$^2$) and relatively constant voltage of 6.0 volts.

After the cell reached steady-state the current was increased to 58 A/ft$^2$ (6.2 amps/dm$^2$) and interrupted every thirty seconds by reducing the cell voltage to 3.3 volts ($V_r$) for 3 seconds causing the current to fall to essentially zero ($T_e$ = 27 seconds, $T_r$ = 3 seconds). The average elevated cell voltage $V_e$ (the voltage during $T_e$) was 5.5 volts. This was a reduction from the constant uninterrupted cell voltage of 6.0 volts, in spite of the increased current. It was expected that the voltage would have increased to 6.2 volts. The cell was operated (with minimal interruptions) under this cycled sequence for 14 days during which perfluorooctanesulfonyl fluoride was produced at an average rate of 18 g/50 amp-hours.

Example 2

Using essentially the procedure described in Example 1 for cycled current conditions, and maintaining the same current cycle sequence, octanesulfonyl fluoride was fed to the cell without the added dimethyl disulfide. The current was controlled at 56 amps/ft$^2$ (6.0 amps/dm$^2$), and the voltage reached a steady-state elevated voltage of 5.6 volts. The reduced voltage was 3.3V.
Perfluorooctanesulfonyl fluoride was produced at an average rate of 21 g/50 amp-hours.

Example 3

An electrochemical fluorination cell according to U.S. Pat. No. 2,713,593 having a 27ft$^2$ (251 dm$^2$) anode was charged with an electrolytic mixture containing 80 wt.% hydrogen fluoride and 2.5 pounds of dimethyl disulfide at a temperature of 54°C. Over a period of 3 days a mixture of 94 wt.% octanesulfonyl fluoride and 6 wt.% dimethyl disulfide was fed to the cell until steady state was achieved; voltage with uninterrupted current was 5.8 volts, the current was 1521 amps, and the normalized resistance was 0.028 ohm-ft$^2$ (0.26 ohm-dm$^2$).

The current was then interrupted every 72 seconds for 8 seconds ($T_e$ = 72 seconds, $T_r$ = 8 seconds) causing the cell voltage to drop compared to the uninterrupted cell voltage, and also causing an increase in the current (current density), and a drop in normalized resistance; voltage during interrupted current operation was 5.6 volts, current was about 1814 amps and the normalized resistance was 0.021 ohm-ft$^2$ (0.19 ohm-dm$^2$).

After an additional two days of operating with interrupted current, DMDS was removed from the feed; the feed was changed to neat octanesulfonyl fluoride (containing no dimethyl disulfide). The current averaged 1800 amps (67 amps/ft$^2$), the voltage averaged 6.0 volts, and the normalized resistance was 0.027 ohm-ft$^2$ (0.25 ohm-dm$^2$). The product perfluorooctanesulfonyl fluoride was produced at an average rate of 21 g/50 amp-hours.

Example 4

An electrochemical, bipolar flow fluorination cell of the type described in U.S. Pat. No. 5,322,597 was initially charged with electrolyte comprising 2 wt.% dimethyl disulfide and 2.7 wt.% octanesulfonyl fluoride in anhydrous HF. The electrolyte was heated to 55°C by means of external heaters. A mixture of 94 wt.% octanesulfonyl fluoride and 6 wt.% dimethyl disulfide was continuously fed to the cell. After 11 hours 114 grams of additional dimethyl disulfide was added to improve cell conductivity. The normalized resistance ranged from 0.035 to 0.054 ohms-ft$^2$ (0.32-0.50 ohms-dm$^2$) and the current densities ranged from 35 to 55 amps/ft$^2$ (3.8-5.9 amps/dm$^2$).

After 28.5 hours the current was cycled as in Example 3 ($T_e$ = 72 seconds, $T_r$ = 8 seconds). The current density increased to 125 amp/ft$^2$ (13.4 amps/dm$^2$) and the normalized resistance decreased to the range from 0.012 to 0.014 ohms-ft$^2$ (0.11-0.13 ohm-dm$^2$). After 33 hours, the external heaters were turned off allowing the cell to cool to 49°C without adversely affecting the operation of the cell. This shows that a bipolar flow cell can be operated at subcooled (operating at a temperature below or a pressure above the bubble point of the reaction solution) conditions by using interrupted current without higher normalized resistance.

Example 5

Using essentially the procedure of Example 1, the cell was charged with a mixture of 99.3 wt.% hydrogen fluoride and 0.7 wt.% dimethyl disulfide. Dibutyl amine was fed continuously at a rate of 6.1 g/50 amp-hours, then lowered to 5.7 g/50 amp-hours when the HF concentration in the electrolyte was below 95%. Perfluorobutane was produced at a rate of 17 g/50 amp-hours and a higher boiling byproduct was produced at 4 g/50 amp-hours. The current density was 59 amps/ft$^2$ (6.3 amps/dm$^2$). The average voltage was 6.1V.

After 12,000 hours of operation, the current was interrupted as in Example 3 ($T_e$ = 72 seconds, $T_e$ = 8 seconds).

The higher boiling byproduct was produced at a lower rate of 2 g/50 amp-hours and the perfluorobutane was produced at a rate of 19 g/50 amp-hours. The average elevated voltage was 5.3 V.

Example 6

Using essentially the procedure of Example 1 and a cell having 0.68 ft$^2$ (6.3 dm$^2$) anode surface area, a single -40°C condenser and a voltage controller having a cycle timer, was charged with an electrolyte solution of 98.3 wt. % anhydrous hydrogen fluoride and 1.7 wt.% dimethyl disulfide. After a short "run-in" time to achieve steady state operating conditions, a mixture of triamylamine containing 6 wt.% dimethyl disulfide was fed continuously to the cell, which was operated at 25 psig and 50°C. The current was cycled through a cycle of 8 seconds elevated current and 72 seconds reduced current. During $T_e$ the current was controlled at 50 A; during T, the voltage was controlled at about 3 V and no current passed. The cell was run for 364 hours under these conditions at a current of 50 A. The following is a tabular summary of the run, excluding the initial cell "run-in":

| Operation with Interrupted Current | | | |
|---|---|---|---|
| Total run time: | 320.5 Hr. | Avg. current: | 44 A |
| Total charge passed: | 14086 AH | Avg. current density: | 65 A/ft$^2$ (7.0 amps/dm$^2$) |
| Average cell voltage: | 6.5 V | Avg. normalized resistance: | 0.035ohm-ft$^2$ (0.32 ohm-dm$^2$) |
| Total organic added: | 1697g | Avg. organic feed rate: | 6.02g/50AH |
| | | Avg. % of theor. | 92.8% |
| | | Avg. $(C_5F_{11})_3$N production rate: | 18.53g/50AH |
| | | Total Crude $(C_5F_{11})_3$N : | 5220g |

At the end of this period, the cell was running at steady-state, at a current of 50 A. The electrolyte concentration was 97% HF. The current listed is the average current over the entire cycle period, including both $T_e$ and $T_r$. The average current during $T_e$ was 49 A. The "Avg. (CSF11)3N production rate" was calculated from G.C. results and from residual analysis.

After the first 344 hours of the run, the cell was switched to uninterrupted operation. The conductivity of the cell immediately began to drop and the cell voltage increased to the preset limit of 7.5 volts. The conductivity continued to decay for 127 hours, the electrolyte concentration at the end of this period was 90% HF and the normalized resistance increased, at which point interrupted current operation was resumed. As interrupted current operation was resumed, the normalized resistance dropped to less than 0.025. the current increased to 55 A at an elevated voltage of 6.2 V, while restoring the HF electrolyte concentration to 95%.

The following is a summary of the operation with uninterrupted current.

| Operation with Uninterrupted Current | | | |
|---|---|---|---|
| Total run time: | 126.7Hr. | Avg. current: | 40A |
| Total charge passed: | 5014AH | Avg. current density: | 58A/ft$^2$ (6.2A/dm$^2$) |
| Average cell voltage: | 7.7V | Avg. normalized resistance: | 0.060 ohm-ft$^2$ (.56 ohm-dm$^2$) |
| Total organic added: | 651g | Avg. organic charge rate: | 6.49g/50AH |
| | | Avg. % of theor. | 100.0% |
| | | Avg. crude $(C_5F_{11})_3$N production rate: | 14.20g/50AH |
| | | Total crude $(C_5F_{11})_3$N produced : | 1424g |

Samples of crude product from operation both with and without current interruption were analyzed for higher boiling polymeric and oligomeric products by drying the samples down to a constant weight in a 240°C oven. The product collected during the uninterrupted current portion of the run averaged 8.3% higher boiling polymeric and oligomeric products, but the product collected during the interrupted current portion of the run averaged only 4.4% higher boiling products. Thus operation with interrupted current reduces the amounts of unwanted by-products.

Example 7

Using essentially the procedure of Example I octanoyl chloride was fluorinated with both interrupted and uninterrupted current operation in a cell having 0.40 ft$^2$ anode surface area, a single -40° condenser and a voltage controller having a cycle timer. The cell was operated at 50°C. The results are as follows:

| Operation with Uninterrupted Current | | | |
|---|---|---|---|
| Total run time: | 378.4Hrs | Avg current: | 15A |
| Total charge passed: | 5721AH | Avg current density: | 38A/ft$^2$ (4. 1 A/dm2) |
| Average cell voltage: | 6.8V | Avg normalized resistance: | 0.07ohm-ft$^2$ (0.64ohm-dm$^2$) |
| Total organic added: | 1063g | Avg organic charge rate: | 9.29g/SOAH |
| | | Avg % of theor. | 93.3% |
| Total high boilers produced: | 2386g | Avg high-boiling product production rate: | 20.85g/50AH |

| Operation with Interrupted Current | | | |
|---|---|---|---|
| Total run time: | 213.8Hrs | Avg current: | 17A |
| Total charge passed: | 3696 AH | Avg. current density: | 43A/ft$^2$ (4.6A/dm2) |
| Average cell voltage: | 5.5 V | Avg normalized resistance: | 0.03ohm-ft$^2$ (0.28 ohm-dm$^2$) |
| Total organic added: | 653 g | Avg organic charge rate: | 8.84 g/50AH |
| | | Avg % of theor. | 88.7% |
| Total high boilers produced: | 1478 g | Avg high boiling product production rate: | 19.99 g/50AH |

Example 8

A designed experiment was conducted to examine the variables of total cycle time, length of time "off" Tr, percentage of time "off" as a function of total cycle time, and elevated voltage. The cell described in Example 1 was initially charged with 2 kg of anhydrous hydrogen fluoride, 42 g of dimethyl disulfide and 20 g of octanesulfonyl fluoride. A mixture of 94 wt.% octanesulfonyl fluoride and 6 wt.% dimethyl disulfide was fed continuously to the cell at a rate of 9.8g/50Ahr. We attempted to control the current at 20-21 amps during the "on" part of the cycle (Te) and between 2 and 3V during the "off" part of the cycle Tr. This was accomplished for all runs except the run having P=0.4 and Tr=0.04, as the voltage was reduced only to approximately 4 volts. Each subsequent run was continued by varying the pulse cycle. The efficiency of the cell operation was measured by calculating the "normalized resistance".

| Cycle time (sec) | 80 | 80 | 1.5 | 0.4 | 0.4 | uninterrupt ed |
|---|---|---|---|---|---|---|
| Time "off"(sec) Tr | 4 | 16 | 0.15 | 0.2 | 0.04 | - |
| % time in reduced voltage | 5 | 20 | 10 | 50 | 0.10 | - |
| Length of run (hr) | 20.1 | 26.7 | 22.2 | 41.9 | 64.3 | 47.9 |
| Charge passed (A-hr) | 397 | 443.9 | 430 | 457.6 | 1237.4 | 959 |

(continued)

| | | | | | | |
|---|---|---|---|---|---|---|
| Cycle time (sec) | 80 | 80 | 1.5 | 0.4 | 0.4 | uninterrupt ed |
| Total A-hr/Total hr | 19.8 | 16.6 | 19.4 | 10.9 | 19.2 | 20 |
| Avg. Ve | 5.1 | 5.0 | 5.1 | 5.2 | 6.8 | 7.6 |
| Avg.I.e., | 20.8 | 20.8 | 20.8 | 20.8 | 20.8 | 20.0 |
| Normalized resistance during Te (ohm-ft2) | .017 | .015 | .017 | .019 | 0.050 | .068 |

The data of the Table indicates that a variety of different cycle periods and Te and Tr values can be effective to reduce the normalized resistance of an electrochemical fluorination cell. Notice, however, that at a very low cycle time (0.4 seconds) in combination with a very low Tr (0.04) the least improvement in normalized resistance resulted.

Example 9

An electrochemical , bipolar flow fluorination cell of the type described in U.S. Pat. No. 5,286,352 was operated at 340 kPa, 48°C (subcooled conditions), with an electrolyte superficial velocity of 0.5 m/s. Octanesulfonyl fluoride and dimethyl disulfide were independently fed to the cell at the mass ratio of 0.94 to 0.06 weight percent. The cell was operated at a current density of 97 amps/ft$^2$ (10.4amps/dm$^2$). The initial average cell voltage was 5.7 V, increasing over a period of 90 minutes to 6.9 V. The "normalized resistance" increased over the same time period from 0.016 to 0.028 ohms-ft$^2$ (0.15-0.26 ohms-dm$^2$).

The same electrochemical cell was then operated at 340 kPa, 48°C (subcooled conditions), with an electrolyte superficial velocity of 0.5 m/s. Octanesulfonyl fluoride and dimethyl disulfide were fed to the cell at the mass ratio of 0.98 to 0.02 weight percent. The cell was operated at a current density of 150 amps/ft2 (16.1 amps/dm$^2$) with the current interrupted every 180 seconds for 4 seconds (176 seconds "on", 4 seconds "off'). The average cell voltage was 6.4 V for an normalized resistance of 0.015 ohms-ft$^2$ (0.14 ohms-dm$^2$).

This example shows that a bipolar flow cell operated at subcooled conditions experiences a rise in voltage when current is uninterrupted, and stable operation of the cell could be achieved using interrupted current.

## Claims

1. A process of electrochemical perfluorination of an organic substrate, the process comprising the steps of:

   providing an organic substrate comprising at least one carbon-bonded hydrogen;
   preparing a reaction solution comprising the substrate and hydrogen fluoride;
   passing electric current through the reaction solution sufficient to cause replacement of the hydrogens of the substrate with fluorine, the electric current being interrupted through a current cycle defined by current levels comprising an elevated current and a reduced current so that the value of the current is periodically changed through a regular, repeating cycle;

   wherein the reduced current is substantially zero, or is in the range from about 0 to 2 milliamps per square centimeter;
   wherein the current is interrupted at a cycle time of 0.4 seconds or more; and
   wherein the current is interrupted in such a manner that the resistance of the cell operated with interrupted current is lower than the resistance of the cell operated with uninterrupted current.

2. The process of claim 1, wherein the elevated current provides a current density flowing through the reaction solution in the range from about 10 to 400 milliamps per square centimeter.

3. The process of claim 1, wherein the cell voltage varies through a cycle defined by an elevated voltage and a reduced voltage.

4. The process of claim 3, wherein the elevated voltage is greater than the zero current intercept of the fluorination reaction, and
   wherein preferably the elevated voltage is in the range from about 4.2 to 9 volts.

5. The process of claim 3, wherein the reduced voltage is sufficient to result in current flowing through the reaction solution to be substantially zero, and/or wherein the reduced voltage is below about 4.2 volts.

6.  The process of claim 1, wherein the electric power through the reaction solution varies between an elevated power and a reduced power.

7.  The process of claim 1, wherein the current is interrupted at a cycle time of 10 seconds or more.

8.  The process of claim 1, wherein the current is reduced for less than 50% of the cycle time or wherein the current is reduced for less than 25% of the cycle time, or wherein the current is reduced for from about 1 to 10 % of the cycle time.

9.  The process of claim 1, wherein the reaction solution further comprises a conductivity additive.

10. The process of claim 9, wherein the conductivity additive comprises dimethyl disulfide.

11. The process of claim 1, wherein the reaction solution contains substantially no conductivity additive.

12. The process of claim 1, wherein the organic substrate is chosen from the group consisting of octane sulfonyl fluoride, triamylamine, octanoyl chloride, and dibutylamide.

13. The process of claim 1, wherein the organic substrate and the reaction solution are provided into a flow cell.

14. The process of claim 13, wherein the flow cell is a bipolar flow cell.

15. The process of claim 1, wherein the perfluorinated substrate is a perfluorinated sulfonyl compound or a perfluorinated amine, or wherein the perfluorinated substrate is perfluorooctane sulfonyl fluoride, perfluorinated triamylamine, perfluorinated octanoyl chloride, or perfluorobutane.

**Patentansprüche**

1.  Verfahren für die elektrochemische Perfluorierung eines organischen Substrats, mit den folgenden Schritten:

    Bereitstellen eines organischen Substrats, das mindestens einen kohlenstoffgebundenen Wasserstoff aufweist;
    Herstellen einer Reaktionslösung, die das Substrat und Wasserstofffluorid aufweist;
    Hindurchführen von elektrischem Strom durch die Reaktionslösung in ausreichendem Maße, um das Ersetzen der Wasserstoffe des Substrats mit Fluor zu verursachen, wobei der elektrische Strom durch einen Stromzyklus unterbrochen wird, der durch Stromniveaus definiert wird, die einen erhöhten Strom und einen reduzierten Strom aufweisen, derart, dass der Wert des Stroms durch einen regelmäßigen, sich wiederholenden Zyklus geändert wird;

    wobei der reduzierte Strom im Wesentlichen null ist oder im Bereich von etwa 0 bis 2 Milliamp. pro Quadratzentimeter liegt;
    wobei der Strom mit einer Zykluszeit von 0,4 Sekunden oder mehr unterbrochen wird; und
    wobei der Strom so unterbrochen wird, dass der Widerstand der mit unterbrochenem Strom betriebenen Zelle geringer ist als der Widerstand der mit ununterbrochenem Strom betriebenen Zelle.

2.  Verfahren nach Anspruch 1, wobei der erhöhte Strom eine Stromdichte, die durch die Reaktionslösung hindurchfließt, im Bereich von etwa 10 bis 400 Milliamp. pro Quadratzentimeter bereitstellt.

3.  Verfahren nach Anspruch 1, wobei die Zellspannung durch einen Zyklus, der durch eine erhöhte Spannung und eine reduzierte Spannung definiert ist, variiert.

4.  Verfahren nach Anspruch 3, wobei die erhöhte Spannung größer ist als die Nullspannungsunterbrechung der Fluorierungsreaktion, und wobei die erhöhte Spannung bevorzugt im Bereich von etwa 4,2 bis 9 Volt liegt.

5.  Verfahren nach Anspruch 3, wobei die reduzierte Spannung ausreicht, um dazu zu führen, dass der durch die Reaktionslösung fließende Strom im Wesentlichen null ist und/oder wobei die reduzierte Spannung unter etwa 4,2 Volt liegt.

**6.** Verfahren nach Anspruch 1, wobei die elektrische Leistung durch die Reaktionslösung zwischen einer erhöhten Leistung und einer reduzierten Leistung variiert.

**7.** Verfahren nach Anspruch 1, wobei der Strom nach einer Zykluszeit von 10 Sekunden oder mehr unterbrochen wird.

**8.** Verfahren nach Anspruch 1, wobei der Strom für weniger als 50 % der Zykluszeit reduziert ist oder wobei der Strom für weniger als 25 % der Zykluszeit reduziert ist oder wobei der Strom für etwa 1 bis 10 % der Zykluszeit reduziert ist.

**9.** Verfahren nach Anspruch 1, wobei die Reaktionslösung ferner ein Leitfähigkeitszusatzmittel aufweist.

**10.** Verfahren nach Anspruch 9, wobei das Leitfähigkeitszusatzmittel Dimethyldisulfid aufweist.

**11.** Verfahren nach Anspruch 1, wobei die Reaktionslösung im Wesentlichen kein Leitfähigkeitszusatzmittel enthält.

**12.** Verfahren nach Anspruch 1, wobei das organische Substrat aus der Gruppe bestehend aus Octansulfonylfluorid, Triamylamin, Octanoylchlorid und Dibutylamin ausgewählt wird.

**13.** Verfahren nach Anspruch 1, wobei das organische Substrat und die Reaktionslösung in eine Flusszelle eingegeben werden.

**14.** Verfahren nach Anspruch 13, wobei die Flusszelle eine bipolare Flusszelle ist.

**15.** Verfahren nach Anspruch 1, wobei das perfluorierte Substrat eine perfluorierte Sulfonylverbindung oder ein perfluoriertes Amin, oder wobei das perfluorierte Substrat Perfluoroctansulfonylfluorid, perfluoriertes Triamylamin, perfluoriertes Octanoylchlorid oder Perfluorbutan ist.

**Revendications**

**1.** Procédé de perfluoration électrochimique d'un substrat organique, le procédé comprenant les étapes qui consistent à :

fournir un substrat organique comprenant au moins un hydrogène à liaison carbone ;
préparer une solution de réaction comprenant le substrat et le fluorure d'hydrogène ;
faire passer un courant électrique à travers la solution de réaction, suffisant pour entraîner le remplacement des hydrogènes du substrat par le fluor, le courant électrique étant interrompu au cours d'un cycle de courant défini par des niveaux de courant comprenant un courant élevé et un courant réduit de sorte que la valeur du courant soit périodiquement changée au cours d'un cycle régulier, répétitif ;

dans lequel le courant réduit est fondamentalement nul, ou est compris entre environ 0 et 2 milliampères par centimètre carré ;
dans lequel le courant est interrompu à un temps de cycle de 0,4 seconde ou plus ; et
dans lequel le courant est interrompu de sorte que la résistance de la cellule actionnée avec le courant interrompu soit inférieure à la résistance de la cellule actionnée avec le courant ininterrompu.

**2.** Procédé selon la revendication 1, dans lequel le courant élevé produit une densité de courant circulant à travers la solution de réaction qui est comprise entre environ 10 et 400 milliampères par centimètre carré.

**3.** Procédé selon la revendication 1, dans lequel la tension de la cellule varie au cours d'un cycle défini par une tension élevée et une tension réduite.

**4.** Procédé selon la revendication 3, dans lequel la tension élevée est supérieure à la tension d'interception à courant nul de la réaction de fluoration, et dans lequel, de préférence, la tension élevée est comprise entre environ 4,2 et 9 volts.

**5.** Procédé selon la revendication 3, dans lequel la tension réduite est suffisante pour que le courant circulant à travers la solution de réaction soit fondamentalement nul, et/ou dans lequel la tension réduite est inférieure à environ 4,2 volts.

**6.** Procédé selon la revendication 1, dans lequel la puissance électrique à travers la solution de réaction varie entre une puissance élevée et une puissance réduite.

**7.** Procédé selon la revendication 1, dans lequel le courant est interrompu à un temps de cycle de 10 secondes ou plus.

**8.** Procédé selon la revendication 1, dans lequel le courant est réduit pendant moins de 50 % du temps de cycle, ou dans lequel le courant est réduit pendant moins de 25 % du temps de cycle, ou dans lequel le courant est réduit pendant entre environ 1 et 10 % du temps de cycle.

**9.** Procédé selon la revendication 1, dans lequel la solution de réaction comprend en outre un additif de conductivité.

**10.** Procédé selon la revendication 9, dans lequel l'additif de conductivité comprend le disulfure de diméthyle.

**11.** Procédé selon la revendication 1, dans lequel la solution de réaction ne contient quasiment pas d'additif de conductivité.

**12.** Procédé selon la revendication 1, dans lequel le substrat organique est choisi dans le groupe constitué du fluorure d'octanesulfonyle, de la triamylamine, du chlorure d'octanoyle, et de la dibutylamine.

**13.** Procédé selon la revendication 1, dans lequel le substrat organique et la solution de réaction sont introduits dans une cellule de circulation.

**14.** Procédé selon la revendication 13, dans lequel la cellule de circulation est une cellule de circulation bipolaire.

**15.** Procédé selon la revendication 1, dans lequel le substrat perfluoré est un composé sulfonyle perfluoré ou une amine perfluorée, ou dans lequel le substrat perfluoré est le fluorure de perfluorooctanesulfonyle, une triamylamine perfluorée, le chlorure d'octanoyle perfluoré, ou le perfluorobutane.

**Fig. 1**

**Fig. 2**

*Fig. 3*

*Fig. 4*

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9413857 A
- US 2519983 A, Simons
- US 5322597 A, Childs
- US 5387323 A, Minday
- US 3028321 A, Danielson
- US 3692643 A, Holland
- US 4739103 A, Hansen
- GB 741399 A
- GB 785492 A
- US 2713593 A
- US 5286352 A

**Non-patent literature cited in the description**

- Anodic Fluorination. **W.V. CHILDS et al.** Organic Electrochemistry. Marcel Dekker Inc, 1991
- The Electrochemical Process for the Synthesis of Fluoro-Organic Compounds. **J. BURDON ; J.C. TATLOW et al.** Advances in Fluorine Chemistry. 1960, vol. 1, 129
- Fluorine Chemistry. Academic Press, Inc, 1950, vol. 1, 416-418
- **ALSMEYER et al.** Organofluorine Chemistry: Principles and Commercial Applications. *Electrochemical Fluorination and Its Applications,* 1994, vol. 5, 121-43
- **S. NAGASE.** *Fluorine Chem. Rev,* 1967, vol. 1 (1), 77-106
- **J. BURDON ; J.C. TATLOW et al.** The Electrochemical Process for the Synthesis of Fluoro-Organic Compounds. *Advances in Fluorine Chemistry,* 1960
- The Electrochemical Process for the Synthesis of Fluoro-Organic Compounds. **J. BURDON ; J.C. TATLOW et al.** Advances in Fluorine Chemistry. 1960